# EUROPEAN PATENT APPLICATION

(11) **EP 4 783 276 A1**
(43) Date of publication of application: **29.07.2026**
(21) Application number: 25206874.7
(22) Date of filing: 06.10.2025
(51) Int. Cl.: H01M 10/04, H01M 50/586, H01M 50/595

(54) **SECONDARY BATTERY AND BATTERY MODULE INCLUDING THE SAME**

(30) Priority: 24.01.2025 KR 20250011237
(71) Applicant: SAMSUNG SDI CO., LTD., Yongin-si, Gyeonggi-do 17084 (KR)
(72) Inventor: Jang, Taewoong, 17084 Yongin-si, Gyeonggi-do (KR)
(74) Representative: Meissner Bolte Partnerschaft mbB

(57) **Abstract**

A secondary battery includes an electrode assembly, a case accommodating the electrode assembly, a cap assembly, and a sealing tape surrounding an outermost portion of the electrode assembly, wherein the sealing tape includes a plurality of first protrusions protruding in a first direction, and a plurality of second protrusions connected to the plurality of first protrusions and protruding in a second direction, the plurality of first protrusions and the plurality of second protrusions are arranged alternately, the plurality of first protrusions are located on an upper side of a reference line, the plurality of second protrusions are located on a lower side of the reference line, and at least some of the plurality of first protrusions or the plurality of second protrusions cover at least a portion of an upper surface or a lower surface of the electrode assembly.

## Description

### BACKGROUND

### 1. Field

The present invention relates to a secondary battery and a battery module including the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present invention, and therefore, it may contain information that does not constitute related (or prior) art.

### SUMMARY

The present invention concerns a secondary battery, including an electrode assembly including a first electrode including a first electrode tab, a separator, and a second electrode, a case having an open side through which the electrode assembly is accommodated, the case being electrically connected to the second electrode, a cap assembly configured to close the open side of the case, the cap assembly being electrically connected to the first electrode tab, and a sealing tape surrounding an outermost portion of the electrode assembly, wherein the sealing tape includes a plurality of first protrusions protruding in a first direction toward an upper end of the electrode assembly, and a plurality of second protrusions connected to the plurality of first protrusions, the plurality of second protrusions protruding in a second direction toward a lower end of the electrode assembly, the plurality of first protrusions and the plurality of second protrusions are alternated, the plurality of first protrusions are on an upper side of a reference line, the plurality of second protrusions are on a lower side of the reference line, the reference line divides the sealing tape in a width direction perpendicular to the first direction and second direction, and at least some of the plurality of first protrusions or at least some of the plurality of second protrusions cover at least a portion of an upper surface or a lower surface of the electrode assembly.

The electrode assembly may include a winding of the first electrode, the second electrode, and the separator, the sealing tape may surround the outermost portion of the electrode assembly along a winding direction, and the first direction and the second direction may each perpendicular to the winding direction of the electrode assembly.

The plurality of first protrusions may include a plurality of upper bending portions that are bent and cover the portion of the upper surface of the electrode assembly.

A shape of an outer side of the plurality of first protrusions and the reference line, and a shape of an inner side of the plurality of first protrusions and the reference line may correspond to each other.

The shape of the outer side of the plurality of first protrusions and the reference line, and the shape of the inner side of the plurality of first protrusions and the reference line may be one of a rectangle, a trapezoid, and a semicircle.

A shape of an outer side of the plurality of first protrusions and the reference line, and a shape of an inner side of the plurality of first protrusions and the reference line may differ from each other.

The shape of the outer side of the plurality of first protrusions and the reference line may be a trapezoid, and the shape of the inner side of the plurality of first protrusions and the reference line may be a triangle.

The sealing tape may include a substrate layer and an inner adhesive layer, and the inner adhesive layer may be between the electrode assembly and the substrate layer.

The sealing tape may further include an outer adhesive layer between the case and the substrate layer.

The substrate layer may include a polymer foam.

The polymer foam may include at least one of a polyurethane resin, a polyolefin resin, a styrene block copolymer, an ethylene copolymer, an acrylic block copolymer, an acrylic acid ester copolymer, and a halogenated polymer.

The first electrode tab may be welded to the cap assembly, and the plurality of upper bending portions may be spaced apart from a region where the first electrode tab and the cap assembly are welded by at least a predetermined distance.

The predetermined distance may be 1 mm.

The plurality of second protrusions may include a plurality of lower bending portions that are bent, resulting in a plurality of lower bent portions, and may cover a portion of a lower surface of the electrode assembly.

The second electrode may include a second electrode tab, the second electrode tab may be welded to the case, and the plurality of lower bent portions may be spaced apart from a region where the second electrode tab and the case are welded by at least a predetermined distance.

The predetermined distance may be 1 mm.

The sealing tape may surround the electrode assembly by at least one full turn.

The secondary battery may be one of a coin-type battery, a cylindrical battery, and a pin-type battery.

A shape of the plurality of first protrusions and a shape of the plurality of second protrusions may differ from each other.

A plurality of the secondary battery may be electrically connected.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 is a cross-sectional view illustrating a secondary battery according to an embodiment of the present invention;
FIG. 2 is a perspective view illustrating an electrode assembly according to an embodiment of the present invention;
FIG. 3 is a diagram illustrating a cross section of a sealing tape according to an embodiment of the present invention;
FIG. 4 is a partial cross-sectional view illustrating an example in which a bending portion of the sealing tape is bent in the secondary battery according to an embodiment of the present invention;
FIG. 5 is a perspective view illustrating a sealing tape according to an embodiment of the present invention;
FIG. 6 is a diagram illustrating a sealing tape according to another embodiment of the present invention;
FIG. 7 is a perspective view illustrating a sealing tape according to another embodiment of the present invention;
FIG. 8 is a perspective view illustrating a sealing tape according to another embodiment of the present invention;
FIG. 9 is a perspective view illustrating an electrode assembly according to another embodiment of the present invention;
FIG. 10 is a diagram illustrating a cross section of the sealing tape of FIG. 9;
FIG. 11 is a perspective view illustrating the sealing tape of FIG. 9;
FIG. 12 is a diagram illustrating a sealing tape according to another embodiment of the present invention;
FIG. 13 is a diagram illustrating a sealing tape according to another embodiment of the present invention;
FIG. 14 is a diagram illustrating a sealing tape according to another embodiment of the present invention; and
FIG. 15 is a perspective view illustrating an electrode assembly according to another embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

It will be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present.

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

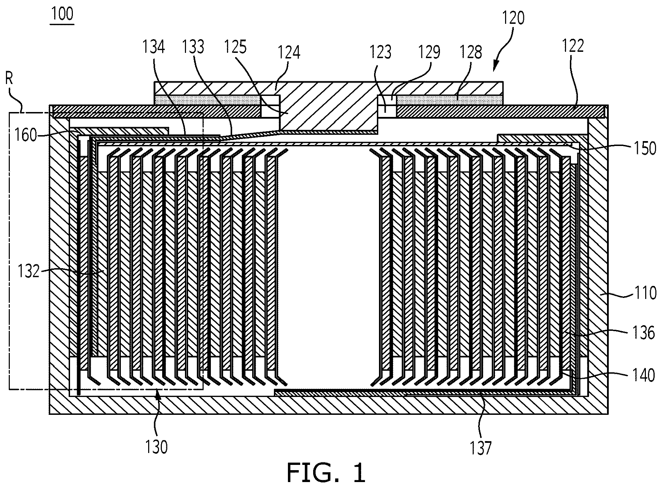

FIG. 1 is a cross-sectional view illustrating a secondary battery according to an embodiment of the present invention.

A secondary battery 100 according to an embodiment of the present invention includes an electrode assembly 130 including a first electrode 132 including a first electrode tab 133 to which an insulating tape 134 is coupled, a separator 140, and a second electrode 136, a case 110 accommodating the electrode assembly 130 through an open side and electrically connected to the second electrode 136, a cap assembly 120 closing the open side of the case 110 and electrically connected to the first electrode tab 133, an insulating sheet 150 disposed between the cap assembly 120 and the electrode assembly 130, and a sealing tape 160 that surrounds the electrode assembly 130 and the insulating tape 134.

The electrode assembly 130 may include the separator 140 and the first electrode 132 and the second electrode 136 positioned with the separator 140 interposed therebetween and may be wound in a jelly-roll shape.

The first electrode 132 includes a first substrate and a first active material layer on the first substrate. A first electrode tab 133 may extend outwardly from a first uncoated portion of the first substrate at where the first active material layer is not located, and the first electrode tab 133 may be electrically connected to the cap assembly 120.

The second electrode 136 includes a second substrate and a second active material layer on the second substrate. A second electrode tab 137 may extend outwardly from a second uncoated portion of the second substrate at where the second active material layer is not located, and the second electrode tab 137 may be electrically connected to the case 110. The first electrode tab 133 and the tab of the second electrode 136 may extend in opposite directions.

The first electrode 132 may act as a positive electrode. In such an embodiment, the first substrate may be made of, for example, an aluminum foil, and the first active material layer may include, for example, a transition metal oxide. The second electrode 136 may act as a negative electrode. In such an embodiment, the second substrate may be made of, for example, a copper foil or a nickel foil, and the second active material layer may include graphite, for example.

The separator 140 prevents a short circuit between the first electrode 132 and the second electrode 136 while allowing movement of lithium ions therebetween. The separator 140 may be made of, for example, a polyethylene film, a polypropylene film, a polyethylene-polypropylene film, or the like.

The case 110 accommodates the electrode assembly 130 and, together with the cap assembly 120, forms the external appearance of the secondary battery. The case 110 may have a substantially cylindrical body portion and a bottom portion connected to one side (e.g., to one end) of the body portion. The case 110 may be made of a metal, such as aluminum, aluminum alloy, or nickel-plated steel.

The second electrode tab 137 may be coupled to a bottom portion of the case 110 and may be electrically connected to the case 110. The first electrode tab 133 may have its end coupled to a protrusion 125 of a terminal plate 124. In a portion of the first electrode tab 133 other than where it is coupled to the protrusion 125 of the terminal plate 124, the insulating tape 134 may be attached. Because the first electrode tab 133, which is bent upward toward the top of the electrode assembly 130, may contact the cap plate 122 of the cap assembly 120 or an inner circumferential surface of the case 110 and cause a short circuit, the insulating tape 134 may be attached.

The cap assembly 120 may include a cap plate 122 in which a through-hole 123 is formed, a terminal plate 124 disposed on the cap plate 122 and including a protrusion 125 inserted into the through-hole 123, and an insulator 128 disposed between the cap plate 122 and the terminal plate 124.

The cap plate 122 may be formed in a disk shape with the through-hole 123 at its center. The cap plate 122 may have a larger diameter than the terminal plate 124 and the insulator 128. The cap plate 122 may be welded to an upper end of the case 110 so as to close the open side of the case 110. Of course, the cap plate 122 may take various shapes corresponding to the shape of the case to which it is fastened.

The terminal plate 124 may be formed in a disk shape having a smaller diameter than the cap plate 122, and a protrusion 125 may be formed at the center of the terminal plate 124 so as to be inserted into the through-hole 123 of the cap plate 122. The protrusion 125 of the terminal plate 124 may protrude toward the electrode assembly 130 when inserted into the through-hole 123. The protrusion 125 of the terminal plate 124 may be a component to which the first electrode tab 133 is coupled. The shape of the terminal plate 124 may be formed in various shapes, other than a disk shape, corresponding to the shape of the cap plate 122.

The protrusion 125 of the terminal plate 124 is coupled to the first electrode tab 133, and the case 110 is coupled to the second electrode tab 137, so that the terminal plate 124 may function as a positive terminal and the case 110 may function as a negative terminal.

The insulator 128 is disposed between the cap plate 122 and the terminal plate 124 so that the cap plate 122 and the terminal plate 124 can be electrically insulated. Since the cap plate 122 and the terminal plate 124 are formed of a conductive metal and are electrically connected, respectively, to the negative electrode (i.e., the second electrode tab 137) and the positive electrode (i.e., the first electrode tab 133), the insulator 128 prevents short-circuiting by insulating the cap plate 122 and the terminal plate 124 from each other. For example, the insulator 128 may be made of a resin such as polypropylene or polyethylene.

The insulator 128 may be formed in a disk shape with an insertion hole 129 at its center, similarly to the cap plate 122. Through this, the protrusion 125 of the terminal plate 124 may pass through the insertion hole 129 of the insulator 128 and the through-hole 123 of the cap plate 122, thus being disposed inside the case 110. The first electrode tab 133 may be coupled to the protrusion 125 of the terminal plate 124, which is disposed inside the case 110. The outer diameter of the insulator 128 may be the same as or similar to that of the terminal plate 124. The cap plate 122 may have an outer diameter larger than that of the insulator 128 and the terminal plate 124. The diameter of the insertion hole 129 of the insulator 128 may be the same as or similar to the diameter of the through-hole 123 of the cap plate 122.

The insulator 128 may be bonded to the cap plate 122 and the terminal plate 124 by a thermal fusion method while heating and pressurizing the cap plate 122 and the terminal plate 124 with the insulator 128 interposed therebetween.

The insulating sheet 150 may be disposed between the cap assembly 120 and the electrode assembly 130 so as to insulate between the top of the electrode assembly 130 and the first electrode tab 133. The insulating sheet 150 may be disposed on the top of the electrode assembly 130. The diameter of the insulating sheet 150 may be formed smaller than the outer diameter of the electrode assembly 130. For example, the insulating sheet 150 may be formed of a resin such as polypropylene or polyethylene.

The sealing tape 160 may be attached to the electrode assembly 130 of the secondary battery 100 according to an embodiment of the present invention. The sealing tape 160 may be a tape that surrounds the outermost portion of the electrode assembly 130, as described above. The sealing tape 160 may be disposed between the outermost portion of the electrode assembly 130 and the case 110. In an embodiment, the sealing tape 160 is attached to the outermost portion of the electrode assembly 130 and may or may not be in contact with the case 110. The sealing tape 160 may serve to insulate the electrode assembly 130 from the case 110. In addition, the sealing tape 160 may be bent at an upper side and/or a lower side. The sealing tape 160 that is bent may cover at least a portion of the upper surface or lower surface of the electrode assembly 130. FIG. 1 illustrates an example in which the sealing tape 160 is bent at the top and covers a portion of the top surface of the electrode assembly 130. When the sealing tape 160 is in close contact with the upper surface or the lower surface of the electrode assembly 130, it may more effectively suppress the movement of the electrode assembly caused by vibration/drop of the secondary battery. In an embodiment, the sealing tape 160 may have a zig-zag shape. The shape and material of the sealing tape 160 will be described below.

A battery module according to an embodiment of the present invention may include a plurality of the secondary battery 100 that are electrically connected. Here, in each of the plurality of the secondary battery 100, the sealing tape 160 is attached to the electrode assembly 130, and cracks in the electrode substrate may occur less frequently as described above. Accordingly, the plurality of the secondary battery 100 and the battery module including the same may have a reduced fire risk due to cracks in the electrode assembly 130.

The secondary battery 100 described with reference to FIG. 1 may be a coin-type or button-type battery. Of course, the present invention may also be applied to other types of secondary batteries (for example, cylindrical batteries). In FIG. 1, the first electrode tab is illustrated as protruding upward and connected to the cap assembly, and the second electrode tab is illustrated as protruding downward and connected to the case. However, both the first electrode tab and the second electrode tab may protrude upward to be respectively connected to the cap assembly and the case.

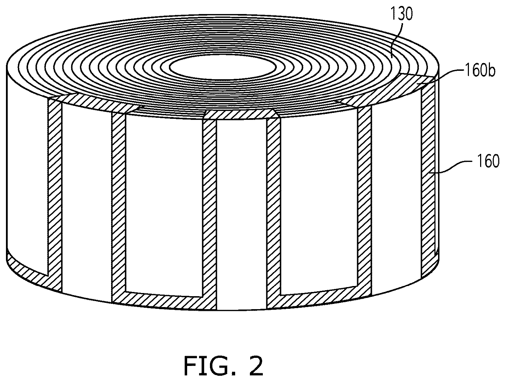

FIG. 2 is a perspective view illustrating an electrode assembly according to an embodiment of the present invention.

A wound electrode assembly is easy to manufacture and may exhibit a high energy density per unit weight. However, stress induced by expansion and contraction of the electrodes during charging and discharging may accumulate in the electrode assembly 130. Specifically, as charging and discharging cycles proceed, the electrode sheets may be repeatedly charged and discharged, and thus the electrode sheets may repeatedly expand and contract. In this process, natural expansion and contraction of the electrode sheets may not be easy due to the sealing tape 160 that surrounds the outermost portion of the electrode assembly 130. Once the stress accumulation arising therefrom exceeds a certain limit, cracks may develop and expand in the electrode sheets.

To address the above-described problem, the sealing tape 160 attached to the outermost portion of the electrode assembly 130 includes, as illustrated in FIG. 2, a first protrusion protruding in a first direction toward the top of the electrode assembly 130, and a second protrusion, connected to the first protrusion, protruding in a second direction toward the bottom of the electrode assembly 130. Here, the terms "top" and "bottom" are used for convenience of description based on the electrode assembly 130 depicted in FIG. 2, but the position may change if the secondary battery is rotated sideways or upside down.

In addition, the first protrusion and the second protrusion may be arranged alternately. In the present invention, the first protrusion and the second protrusion may be repeatedly arranged so as to extend around at least one full turn (or loop) along the circumference of the outermost portion of the electrode assembly 130. In this alternated arrangement, adjacent protrusions may protrude in substantially opposite directions, or adjacent protrusions may protrude in the same direction, and protrusions that are separated by one protrusion in between may protrude in opposite directions. Hereinafter, for ease of explanation, a case in which adjacent protrusions protrude in substantially opposite directions will be described as an example.

In an embodiment, the first direction in which the first protrusion protrudes and the second direction in which the second protrusion protrudes may each be perpendicular to the winding direction of the electrode assembly 130. Here, the "winding direction" of the electrode assembly 130 may refer to the direction in which the first substrate or the second substrate is wound around the winding axis.

In an embodiment, the first protrusion of the sealing tape 160 may protrude higher than the upper surface of the electrode assembly 130. Part of the first protrusion protruding higher than the upper surface of the electrode assembly 130 may be bent onto the upper surface of the electrode assembly 130. The sealing tape 160 portion that is bent may cover a portion of the upper surface of the electrode assembly 130. The sealing tape 160 may be in close contact with the electrode assembly 130.

In an embodiment, the thickness of the sealing tape 160 may be such that it provides a sufficient gap for insulating the case from the electrode assembly 130. Specifically, the sealing tape 160 may be manufactured so that its thickness is equal to or thinner than the gap between the outermost portion of the electrode assembly 130 (e.g., in its fully expanded state over the service life of the secondary battery) and the case. As described below, the sealing tape 160 may include a substrate layer and an adhesive layer, and the thickness of the substrate layer and the adhesive layer may be adjusted according to the size of the case and the electrode assembly 130 of the secondary battery to form the thickness of the sealing tape 160 as described above.

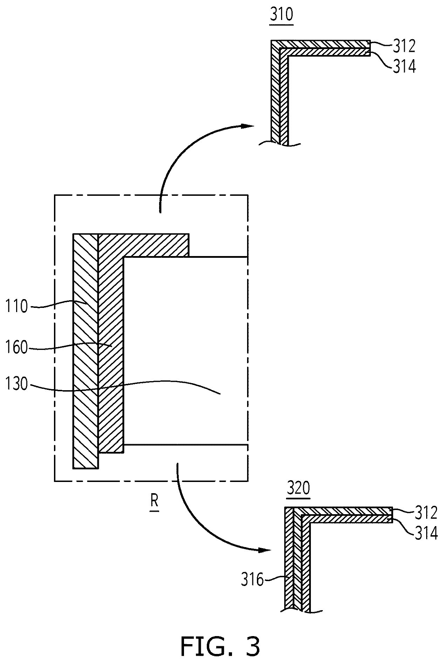

FIG. 3 is a diagram illustrating a cross section of a sealing tape according to an embodiment of the present invention. In detail, FIG. 3 is a schematic enlarged view of a region R in FIG. 1.

In an embodiment, the sealing tape 160 may include a substrate layer 312 and an inner adhesive layer 314. Specifically, the inner adhesive layer 314 may be disposed between the electrode assembly 130 and the substrate layer 312.

In an embodiment, the sealing tape 160 may include the inner adhesive layer 314 disposed on one surface of the substrate layer 312 and an outer adhesive layer 316 disposed on the other surface of the substrate layer 312. The inner adhesive layer 314 may be disposed between the electrode assembly 130 and the substrate layer 312, and the outer adhesive layer 316 may be disposed between the case 110 and the substrate layer 312. In an embodiment, the thickness of the inner adhesive layer 314 and the outer adhesive layer 316 may be thinner than the thickness of the substrate layer 312. Like the substrate layer 312, the inner adhesive layer 314 may be bent upward, and the outer adhesive layer 316 may be formed in a linear shape along the height of the case 110. Although the outer adhesive layer 316 is depicted linearly, it may vary.

In an embodiment, the substrate layer 312 may be formed by appropriately selecting a polymer and a crosslinker that impart water and/or oil resistance. Polymers having a long linear molecular structure may have difficulty interacting with each other. Through the crosslinker, chemical bonds may be formed between linear molecules so that they can interact with each other. By using a crosslinker, the polymers may become interconnected to form a network structure. Consequently, the strength and elasticity of the polymer material may be improved, thereby forming an insoluble material with a three-dimensional structure. Accordingly, when the sealing tape 160 is accommodated together with the electrode assembly 130 in the case 110, it may exhibit reliable chemical resistance against an electrolyte and may also provide elasticity in response to expansion and contraction of the electrode assembly 130, thereby avoiding damage to the sealing tape 160.

Here, the polymer may refer to a polymer foam. The polymer foam may include at least one selected from among a polyurethane resin, a polyolefin resin, a styrene block copolymer, an ethylene copolymer, an acrylic block copolymer, an acrylic acid ester copolymer, or a halogenated polymer.

The polyurethane resin may be a polymer of a polyol and a polyfunctional isocyanate. The polyolefin resin may be, for example, polyethylene or polypropylene. The styrene block copolymer may be, for example, a styrene-butadiene-styrene block copolymer or a styrene-isobutylene-styrene block copolymer. The ethylene copolymer may be, for example, ethylene-vinyl acetate, ethylene-ethyl acrylate, or ethylene-methyl methacrylate. The acrylic block copolymer may be, for example, a methyl methacrylate-butyl acrylate-methyl methacrylate block copolymer. The acrylic acid ester copolymer may be, for example, a copolymer of 2-ethylhexyl acrylate or methyl acrylate. The halogenated polymer may be, for example, polyvinyl chloride.

The base polymer may be a polyurethane resin that exhibits outstanding flexibility and impact resistance so as not to be damaged by the expansion and contraction of the electrode assembly 130 and so as to prevent cracks in the electrode substrate where the sealing tape 160 is attached.

In an embodiment, the inner adhesive layer 314 and the outer adhesive layer 316 may include an acrylate adhesive composition. However, any adhesive having tackiness and chemical resistance to the electrolyte may be used.

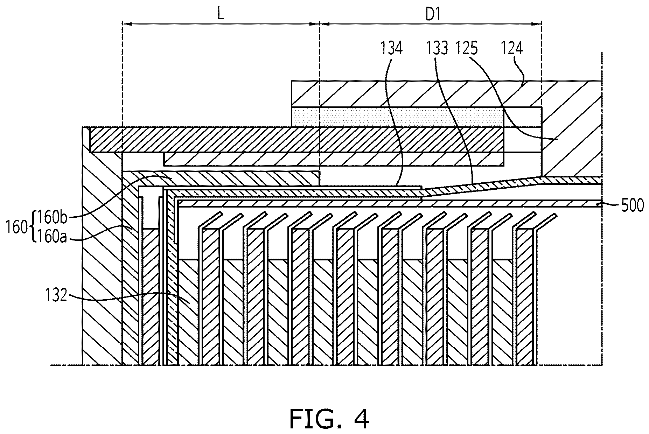

FIG. 4 is a partial cross-sectional view illustrating an example in which a bending portion of the sealing tape is bent in the secondary battery according to an embodiment of the present invention.

Referring to FIG. 4, the sealing tape 160 includes a pillar portion 160a and an upper bending portion 160b. The pillar portion 160a may be formed perpendicular to the winding direction of the electrode assembly 130 so as to surround the outermost portion (or outermost surface) of the electrode assembly 130. The upper bending portion 160b may be bent to cover a portion of the top surface of the electrode assembly 130. The upper bending portion 160b may be formed by bending the first protrusion. The pillar portion 160a may be the remainder of the first protrusion excluding the upper bending portion 160b. For example, the pillar portion 160a may contact the side surface (or the outermost surface) of the electrode assembly, and the upper bending portion 160b may contact the top surface of the electrode assembly.

The first electrode tab 133 may be welded to the cap assembly 120. The length (L) of the upper bending portion 160b may be spaced apart by at least a predetermined distance (D1) from the region where the first electrode tab 133 and the cap assembly 120 are welded. The predetermined distance (D1) may be greater than or equal to 1 mm. According to an embodiment, this may prevent interference with the sealing tape 160 at the point where the electrode tab is welded to the cap assembly.

In other embodiments, the length of the lower bending portion and the region where the second electrode tab is welded may be formed similarly as described above.

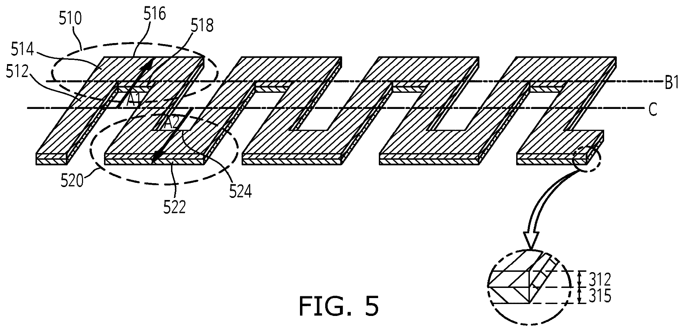

FIG. 5 is a perspective view illustrating a sealing tape according to an embodiment of the present invention. FIG. 5 is a diagram for describing the sealing tape attached to the electrode assembly illustrated in FIG. 2. Hereinafter, reference line C may be a virtual line to explain the protrusion directions of the sealing tape, and a first bending line B1 may be a virtual line to explain bending of the sealing tape onto the upper surface of the electrode assembly.

A first protrusion 510 may be located above the reference line C, and a second protrusion 520 may be located below the reference line C. Here, the reference line C may divide the sealing tape in the width direction. For example, the width of the sealing tape may correspond to (e.g., be the same as) the width of the pillar portion 512. The reference line C may bisect the sealing tape in the width direction, but this may vary.

In an embodiment, as illustrated in FIG. 5, the tape includes the first protrusion 510 protruding in a first direction A1 and a second protrusion 520 protruding in a second direction A2 and connected to the first protrusion 510. Here, the first direction A1 may be a direction toward the top of the electrode assembly, and the second direction A2 may be a direction toward the bottom of the electrode assembly. The first protrusion 510 and the second protrusion 520 may be arranged alternately (e.g., may be alternated).

In an embodiment, the first protrusion 510 may be bent along the first bending line B1. The first protrusion 510 may include a pillar portion 512 connected to the second protrusion 520. The pillar portion 512 may be bent along the first bending line B1 so as to form an upper bending portion 514 (e.g., corresponding to the bending portion 160b in FIGS. 2 and 4). The upper bending portion 514 may cover (e.g., cover a portion of) the top surface of the electrode assembly 130. Part of the sealing tape (for example, the upper bending portion 514) may adhere closely to the top surface of the electrode assembly 130 to more effectively suppress the movement of the electrode assembly due to vibrations/drops of the secondary battery. In FIG. 5, the first bending line B1 is shown as being bent with respect to the horizontal line of the inner side 518 of the first protrusion 510. However, the first bending line B1 may lie below the horizontal line of the inner side 518 of the first protrusion. In this case, part of the pillar portion 512 may be included in the upper bending portion 514. In another example, the first bending line B1 may lie above the horizontal line of the inner side 518 of the first protrusion.

Referring to FIG. 5, the sealing tape may include a substrate layer 312 and an adhesive layer 315, and the adhesive layer 315 may be disposed on one surface of the substrate layer 312. In this case, the adhesive layer 315 may have the same form as the substrate layer 312, in which the first protrusion 510 and the second protrusion 520 alternate as described above. Here, the adhesive layer 315 may be an inner adhesive layer contacting the outermost substrate of the electrode assembly or an outer adhesive layer contacting the case of the secondary battery. However, if the adhesive layer 315 shown in FIG. 5 is an outer adhesive layer, an inner adhesive layer may additionally be disposed on the upper surface of the substrate layer 312.

In an embodiment, the shape formed by an outer side 516 of the first protrusion 510 and the reference line C, and the shape formed by an inner side 518 of the first protrusion 510 and the reference line C may correspond to (e.g., match) each other. The shape formed by the outer side 516 of the first protrusion 510 and the reference line C and the shape formed by the inner side 518 of the first protrusion 510 and the reference line C may be identical in shape yet differ in size. For example, as illustrated in FIG. 5, the shape formed by the outer side 516 of the first protrusion 510 and the reference line C and the shape formed by the inner side 518 of the first protrusion 510 and the reference line C may both be rectangular. The above description of the first protrusion 510 also applies similarly to the second protrusion 520.

Referring to FIG. 5, in an embodiment, the shape formed by an outer side 522 of the second protrusion 520 and the reference line C and the shape formed by an inner side 524 of the second protrusion 520 and the reference line C may correspond to each other. In other words, the two shapes may be identical, differing only in size. For example, both shapes may be rectangular.

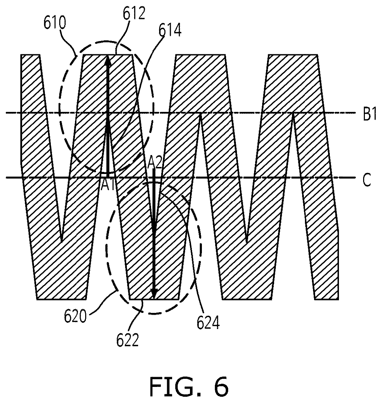

FIG. 6 is a diagram illustrating a sealing tape according to another embodiment of the present invention. FIG. 6 is a plan view of the sealing tape as seen from above. Repetitive descriptions of the above content are omitted.

The shape formed by the outer side of the first protrusion and the reference line C, and the shape formed by the inner side of the first protrusion and the reference line C, may differ from each other. For example, the shape formed by the outer side of the first protrusion and the reference line C, and the shape formed by the inner side of the first protrusion and the reference line C, may be any one of a triangle, a rectangle, a trapezoid, or a semicircle, and may differ from each other. The shape and size of the second protrusion may be the same as or similar to the shape and size of the first protrusion.

In an embodiment, the first protrusion may be bent along a first bending line B1. The first protrusion, bent along the first bending line B1, may form an upper bending portion. The upper bending portion may cover the top surface (e.g., a portion of the top surface) of the electrode assembly. Part of the sealing tape (for example, the upper bending portion) may adhere closely to the top surface of the electrode assembly to more effectively suppress movement of the electrode assembly due to vibration/drop of the secondary battery.

In the tape shown in FIG. 6, the shape formed by the outer side 612 of a first protrusion 610 and the reference line C, and the shape formed by the outer side 622 of a second protrusion 620 and the reference line C may be trapezoids, while the shape formed by the inner side 614 of the first protrusion 610 and the reference line C and the shape formed by the inner side 624 of the second protrusion 620 and the reference line C may be triangles, differing from each other.

In an embodiment, the shapes of the first protrusion and the second protrusion may differ from each other. For example, the shape formed by the outer side of the first protrusion and the reference line may differ from the shape formed by the outer side of the second protrusion and the reference line. In this and other embodiments, the shape formed by the inner side of the first protrusion and the reference line may differ from the shape formed by the inner side of the second protrusion and the reference line.

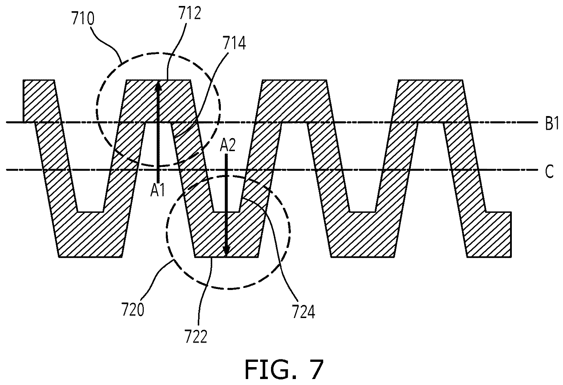

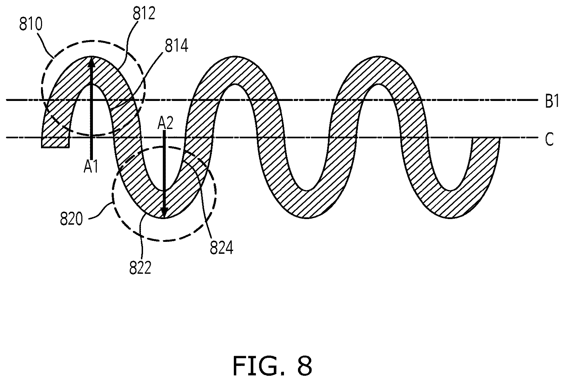

FIGS. 7 and 8 are perspective views illustrating a sealing tape according to other embodiments of the present invention. FIGS. 7 and 8 are plan views of the sealing tape as seen from above. Repetitive descriptions of the above content are omitted.

The shape formed by the outer side of the first protrusion and the reference line C, and the shape formed by the inner side of the first protrusion and the reference line C, may correspond to (e.g., be the same as) each other. In other words, the shape formed by the outer side of the first protrusion and the reference line C, and the shape formed by the inner side of the first protrusion and the reference line C, may be identical in shape but differ in size. For example, they may both be any one of a triangle, a rectangle, a trapezoid, or a semicircle. The shape and size of the second protrusion may be the same as those of the first protrusion. In another example, the shape and/or size of the second protrusion may differ from the shape and/or size of the first protrusion.

In an embodiment, the first protrusion may be bent along a first bending line B1. The first protrusion, bent along the first bending line B1, may form an upper bending portion covering the top surface (e.g., a portion of the top surface) of the electrode assembly. Part of the sealing tape (for example, the upper bending portion) may adhere closely to the top surface of the electrode assembly to more effectively suppress movement of the electrode assembly due to vibration/drop of the secondary battery.

In the tape shown in FIG. 7, the shape formed by the outer side 712 of a first protrusion 710 and the reference line C, and the shape formed by the inner side 714 of the first protrusion 710 and the reference line C, may both be trapezoids. Also, the shape formed by the outer side 722 of a second protrusion 720 and the reference line C, and the shape formed by the inner side 724 of the second protrusion 720 and the reference line C, may both be trapezoids.

In the tape shown in FIG. 8, the shape formed by the outer side 812 of a first protrusion 810 and the reference line C, and the shape formed by the inner side 814 of the first protrusion 810 and the reference line C, may both be semicircles. Also, the shape formed by the outer side 822 of a second protrusion 820 and the reference line C, and the shape formed by the inner side 824 of the second protrusion 820 and the reference line C, may both be semicircles.

In an embodiment, the shape of the first protrusion 710 and the shape of the first protrusion 810 and the shape of the second protrusion 720 and the shape of the second protrusion 820 may differ from each other. For example, the shape formed by the outer side of the first protrusion 710 and the outer side of the first protrusion 810 and the reference line may differ from the shape formed by the outer side of the second protrusion 720 and the outer side of the second protrusion 820 and the reference line. Additionally or alternatively, the shape formed by the inner side of the first protrusion 710 and the inner side of the first protrusion 810 and the reference line may differ from the shape formed by the inner side of the second protrusion 720 and the inner side of the second protrusion 820 and the reference line.

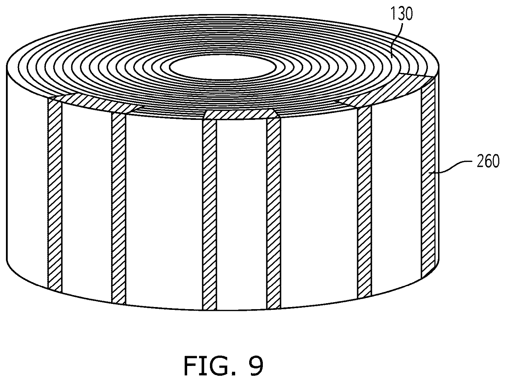

FIG. 9 is a perspective view illustrating an electrode assembly according to another embodiment of the present invention.

Referring to FIG. 9, a sealing tape 260 attached to the outermost portion of the electrode assembly 130 includes a first protrusion protruding in a first direction toward the top of the electrode assembly 130 and a second protrusion, connected to the first protrusion, protruding in a second direction toward the bottom of the electrode assembly 130. Here, "top" and "bottom" are used for convenience of explanation based on the electrode assembly 130 shown in FIG. 9, but the position may change if the secondary battery is rotated sideways or upside down.

The first protrusion and the second protrusion may be arranged alternately. In the present invention, the first protrusion and the second protrusion may be repeatedly arranged around the circumference of the outermost portion of the electrode assembly 130 by a length sufficient to form at least one full turn around the circumference. In another example, the first protrusion and the second protrusion may be arranged repeatedly over a length less than one full turn around the circumference of the outermost portion of the electrode assembly 130. In this alternate arrangement, adjacent protrusions may protrude in substantially opposite directions, or adjacent protrusions may protrude in the same direction while protrusions separated by one in between protrude in opposite directions. Hereinafter, for ease of explanation, a case in which adjacent protrusions protrude in substantially opposite directions will be described as an example.

In an embodiment, the first direction in which the first protrusion protrudes and the second direction in which the second protrusion protrudes may each be perpendicular to the winding direction of the electrode assembly 130. Here, the "winding direction" of the electrode assembly 130 may refer to the direction in which the first substrate or the second substrate is wound around the winding axis.

In an embodiment, the first protrusion of the sealing tape 260 may protrude higher than the upper surface of the electrode assembly 130. The first protrusion may be bent onto the upper surface of the electrode assembly 130. The sealing tape 260 that is bent may cover a portion of the upper surface of the electrode assembly 130. Part of the sealing tape 260 (for example, an upper bending portion) may adhere closely to the electrode assembly 130. Also, the second protrusion of the sealing tape 260 may protrude further below the lower surface of the electrode assembly 130. The second protrusion may be bent onto the lower surface of the electrode assembly 130. The sealing tape 260 that is bent may cover a portion of the lower surface of the electrode assembly 130. Part of the sealing tape 260 (for example, a lower bending portion) may adhere closely to the electrode assembly 130. As shown in FIG. 9, only the sealing tape (260) (e.g., pillar portions) formed in parallel lines may be visible on the side surface of the electrode assembly.

In an embodiment, the thickness of the sealing tape 260 may be such that it provides a sufficient gap for insulating the case from the electrode assembly 130. Specifically, the sealing tape 260 may be manufactured so that its thickness is equal to or thinner than the gap between the outermost portion of the electrode assembly 130 (in its fully expanded state over the service life of the secondary battery) and the case. As described below, the sealing tape 260 may include a substrate layer and an adhesive layer. The thickness of the substrate layer and the adhesive layer may be adjusted based on the sizes of the case and the electrode assembly 130 of the secondary battery so as to form the thickness of the sealing tape 260 as described above.

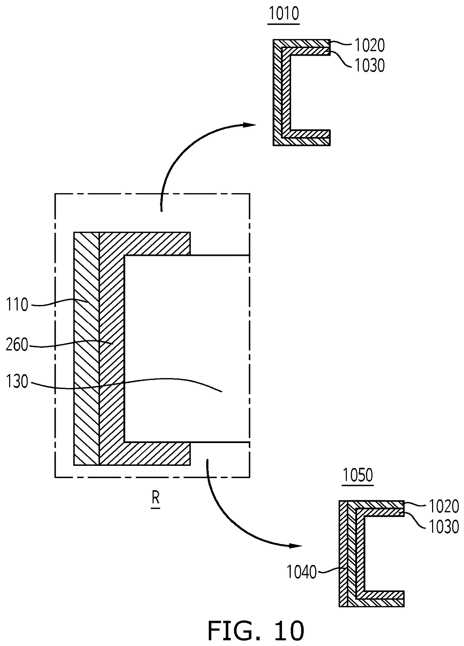

FIG. 10 is a diagram illustrating a cross section of the sealing tape of FIG. 9. FIG. 10 is a schematic enlarged view of a region R in FIG. 1.

In an embodiment, the sealing tape 260 may include a substrate layer 1020 and an inner adhesive layer 1030. Specifically, the inner adhesive layer 1030 may be disposed between the electrode assembly 130 and the substrate layer 1020.

In a first example 1010, the sealing tape 260 may include the inner adhesive layer 1030 disposed on one surface of the substrate layer 1020. The inner adhesive layer 1030 may be disposed between the electrode assembly 130 and the substrate layer 1020.

In a second example 1050, the sealing tape 260 may include the inner adhesive layer 1030 disposed on one surface of the substrate layer 1020 and an outer adhesive layer 1040 disposed on the other surface of the substrate layer 1020. The inner adhesive layer 1030 may be disposed between the electrode assembly 130 and the substrate layer 1020, and the outer adhesive layer 1040 may be disposed between the case 110 and the substrate layer 1020.

In an embodiment, the thickness of the inner adhesive layer 1030 and the outer adhesive layer 1040 may be thinner than the thickness of the substrate layer 1020. The inner adhesive layer 1030, like the substrate layer 1020, may be bent at the upper and lower portions, and the outer adhesive layer 1040 may be formed in a linear shape along the height of the case 110. Although the outer adhesive layer 1040 is depicted in a linear shape, the same shape as that of the substrate layer 1020 may also be implemented.

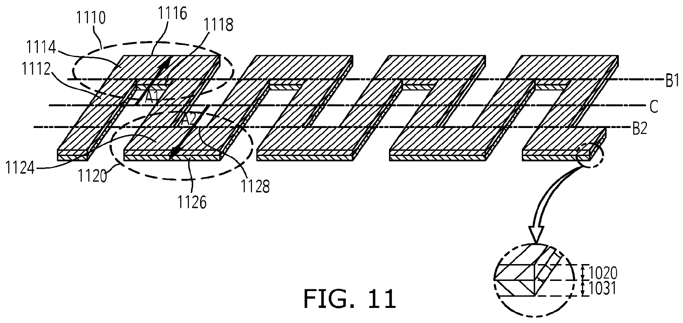

FIG. 11 is a perspective view illustrating the sealing tape of FIG. 9. FIG. 11 is a diagram for describing the sealing tape attached to the electrode assembly illustrated in FIG. 9. Hereinafter, reference line C may be a virtual line to explain the protrusion directions of the sealing tape, a first bending line B1 may be a virtual line to explain bending of the sealing tape onto the upper surface of the electrode assembly, and a second bending line B2 may be a virtual line to explain bending of the sealing tape onto the lower surface of the electrode assembly.

A first protrusion 1110 may be located above the reference line C, and a second protrusion 1120 may be located below the reference line C. Here, the reference line C may divide the sealing tape in the width direction. For example, the width of the sealing tape may correspond to the width of the pillar portion 1112. The reference line C may bisect the sealing tape in the width direction, but this may vary.

In an embodiment, as illustrated in FIG. 11, the tape includes the first protrusion 1110 protruding in a first direction A1 and connected to the first protrusion 1110, the second protrusion 1120 protruding in a second direction A2. Here, the first direction A1 may be the direction toward the top of the electrode assembly, and the second direction A2 may be the direction toward the bottom of the electrode assembly. The first protrusion 1110 and the second protrusion 1120 may be arranged alternately.

In an embodiment, the first protrusion 1110 may be bent along the first bending line B1. The first protrusion 1110 may include a pillar portion 1112 connected to the second protrusion 1120. The pillar portion 1112 may be bent along the first bending line B1 to form an upper bending portion 1114, and bent along the second bending line B2 to form a lower bending portion 1124. The upper bending portion 1114 may cover the top surface of the electrode assembly 130, and the lower bending portion 1124 may cover the bottom surface of the electrode assembly 130. Portions of the sealing tape (for example, the upper bending portion 1114 and the lower bending portion 1124) may adhere closely to the top and bottom surfaces of the electrode assembly 130, respectively, to more effectively suppress the movement of the electrode assembly due to vibration/drop of the secondary battery. In FIG. 11, the first bending line B1 is shown as being bent with respect to the horizontal line of the inner side 1118 of the first protrusion 1110, and the second bending line B2 is shown as being bent with respect to the horizontal line of the inner side 1128 of the second protrusion 1120. However, the first bending line B1 may lie below the horizontal line of the inner side 1118 of the first protrusion 1110, and the second bending line B2 may lie above the horizontal line of the inner side 1128 of the second protrusion 1120. In this case, part of the pillar portion 1112 may be included in the upper bending portion 1114 and the lower bending portion 1124. In another example, the first bending line B1 may lie above the horizontal line of the inner side 1118 of the first protrusion 1110, and/or the second bending line B2 may lie below the horizontal line of the inner side 1128 of the second protrusion 1120.

Referring to FIG. 11, the sealing tape may include a substrate layer 1020 and an adhesive layer 1031, and the adhesive layer 1031 may be disposed on one surface of the substrate layer 1020. In this case, the adhesive layer 1031 may have the same form as the substrate layer 1020, in which the first protrusion 1110 and the second protrusion 1120 alternate as described above. Here, the adhesive layer 1031 may be an inner adhesive layer contacting the outermost substrate of the electrode assembly or an outer adhesive layer contacting the case of the secondary battery. However, if the adhesive layer 1031 in FIG. 11 is an outer adhesive layer, an inner adhesive layer may also be disposed on the upper surface of the substrate layer 1020.

In an embodiment, the shape formed by an upper bending portion 1116 of the first protrusion 1110 and the reference line C, and the shape formed by an inner side 1118 of the first protrusion 1110 and the reference line C may correspond to (e.g., match) each other. The shape formed by the upper bending portion 1116 of the first protrusion 1110 and the reference line C, and the shape formed by the inner side 1118 of the first protrusion 1110 and the reference line C may be identical but differ in size. For example, as illustrated in FIG. 11, both shapes may be rectangular. The above description of the first protrusion 1110 applies similarly to the second protrusion 1120.

Referring to FIG. 11, in an embodiment, the shape formed by a lower bending portion 1126 of the second protrusion 1120 and the reference line C, and the shape formed by an inner side 1128 of the second protrusion 1120 and the reference line C may correspond to each other. In other words, the two shapes may be identical, differing only in size. For example, both shapes may be rectangular.

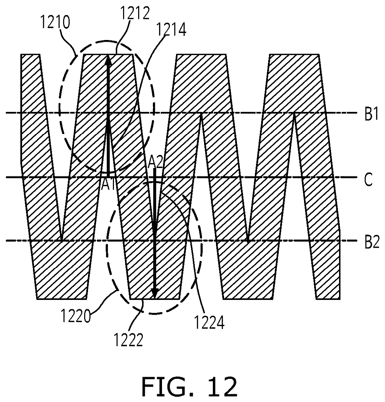

FIG. 12 is a diagram illustrating a sealing tape according to another embodiment of the present invention. FIG. 12 is a plan view of the sealing tape as seen from above. Repetitive descriptions of the above content are omitted.

The shape formed by the outer side of the first protrusion and the reference line C, and the shape formed by the inner side of the first protrusion and the reference line C may differ from each other. For example, the shape formed by the outer side of the first protrusion and the reference line C, and the shape formed by the inner side of the first protrusion and the reference line C may each be any one of a triangle, a rectangle, a trapezoid, or a semicircle, and may differ from each other. The shape and size of the second protrusion may be the same or similar to the shape and size of the first protrusion.

In an embodiment, the first protrusion may be bent along a first bending line B1. By being bent along the first bending line B1, the first protrusion may form an upper bending portion that covers the top surface (e.g., a portion of the top surface) of the electrode assembly. The second protrusion may be bent along a second bending line B2. By being bent along the second bending line B2, the second protrusion may form a lower bending portion that covers (e.g., a portion of) the bottom surface of the electrode assembly. Portions of the sealing tape (for example, the upper bending portion and the lower bending portion) may adhere closely to the top and bottom surfaces of the electrode assembly, respectively, to more effectively suppress movement of the electrode assembly caused by vibration/drop of the secondary battery.

In the tape shown in FIG. 12, the shape formed by the outer side 1212 of a first protrusion 1210 and the reference line C, and the shape formed by the outer side 1222 of a second protrusion 1220 and the reference line C, are trapezoids, while the shape formed by the inner side 1214 of the first protrusion 1210 and the reference line C, and the shape formed by the inner side 1224 of the second protrusion 1220 and the reference line C, are triangles, differing from each other.

In an embodiment, the shape of the first protrusion and the shape of the second protrusion may differ from each other. For example, the shape formed by the outer side of the first protrusion and the reference line may differ from the shape formed by the outer side of the second protrusion and the reference line. In this and other embodiments, the shape formed by the inner side of the first protrusion and the reference line may differ from the shape formed by the inner side of the second protrusion and the reference line.

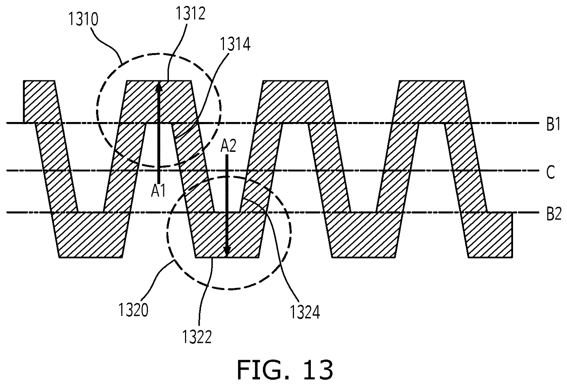

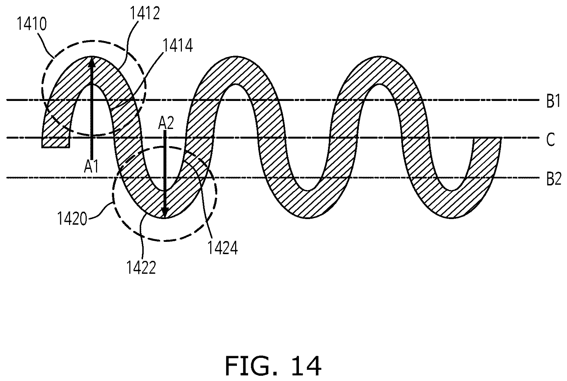

FIGS. 13 and 14 are diagrams illustrating a sealing tape according to other embodiments of the present invention. FIGS. 13 and 14 are plan views of the sealing tape as seen from above. Repetitive descriptions of the above content are omitted.

The shape formed by the outer side of the first protrusion and the reference line C, and the shape formed by the inner side of the first protrusion and the reference line C, may correspond to each other. In other words, the shape formed by the outer side of the first protrusion and the reference line C, and the shape formed by the inner side of the first protrusion and the reference line C may be identical, differing only in size. For example, each of those shapes may be any one of a triangle, a rectangle, a trapezoid, or a semicircle. The shape and size of the second protrusion may be identical to those of the first protrusion. In another example, the shape and/or size of the second protrusion may differ from those of the first protrusion.

In an embodiment, the first protrusion may be bent along a first bending line B1. By being bent along the first bending line B1, the first protrusion may form an upper bending portion covering (e.g., a portion of) the top surface of the electrode assembly. The second protrusion may be bent along a second bending line B2. By being bent along the second bending line B2, the second protrusion may form a lower bending portion covering (e.g., a portion of) the bottom surface of the electrode assembly. Portions of the sealing tape (for example, the upper bending portion and the lower bending portion) may adhere closely to the top and bottom surfaces of the electrode assembly, respectively, to more effectively suppress the movement of the electrode assembly due to vibration/drop of the secondary battery.

In the tape shown in FIG. 13, the shape formed by the outer side 1312 of a first protrusion 1310 and the reference line C, and the shape formed by the inner side 1314 of the first protrusion 1310 and the reference line C, may both be trapezoids. Likewise, the shape formed by the outer side 1322 of a second protrusion 1320 and the reference line C, and the shape formed by the inner side 1324 of the second protrusion 1320 and the reference line C, may both be trapezoids.

In the tape shown in FIG. 14, the shape formed by the outer side 1412 of a first protrusion 1410 and the reference line C, and the shape formed by the inner side 1414 of the first protrusion 1410 and the reference line C, may both be semicircles. Likewise, the shape formed by the outer side 1422 of a second protrusion 1420 and the reference line C, and the shape formed by the inner side 1424 of the second protrusion 1420 and the reference line C, may both be semicircles.

In an embodiment, the shape of the first protrusion 1310 and the shape of the first protrusion 1410 and the shape of the second protrusion 1320 and the second protrusion 1420 may differ from each other. For example, the shape formed by the outer side of the first protrusion 1310 and the outer side of the first protrusion 1410 and the reference line may differ from the shape formed by the outer side of the second protrusion 1320 and the outer side of the second protrusion 1420 and the reference line. In this and other embodiments, the shape formed by the inner side of the first protrusion 1310 and the shape formed by the first protrusion 1410 and the reference line may differ from the shape formed by the inner side of the second protrusion 1320 and the inner side of the second protrusion 1420 and the reference line.

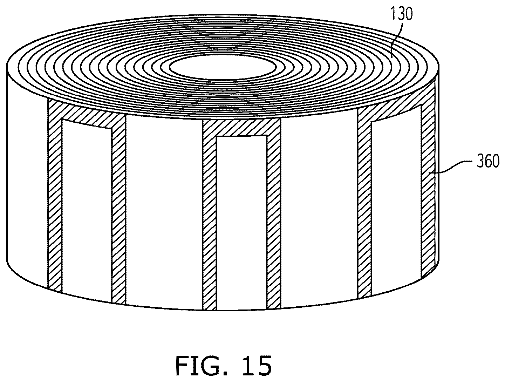

FIG. 15 is a perspective view illustrating an electrode assembly according to another embodiment of the present invention.

Referring to FIG. 15, a sealing tape 360 attached to the outermost portion of the electrode assembly 130 includes a first protrusion protruding in a first direction toward the top of the electrode assembly 130, and a second protrusion, connected to the first protrusion, protruding in a second direction toward the bottom of the electrode assembly 130. Here, "top" and "bottom" are used for convenience of explanation based on the electrode assembly 130 in FIG. 2, but the position may change if the secondary battery is rotated sideways or upside down.

The first protrusion and the second protrusion may be arranged alternately. In the present invention, the first protrusion and the second protrusion may be repeatedly arranged around the circumference of the outermost portion of the electrode assembly 130 by a length sufficient to form at least one full turn around the circumference. In another example, the first protrusion and the second protrusion may be arranged repeatedly over a length less than one full turn around the circumference of the outermost portion of the electrode assembly 130. In this alternated arrangement, adjacent protrusions may protrude in substantially opposite directions, or adjacent protrusions may protrude in the same direction while protrusions separated by one in between protrude in opposite directions. Hereinafter, for ease of explanation, a case in which adjacent protrusions protrude in substantially opposite directions will be described as an example.

In an embodiment, the first direction in which the first protrusion protrudes and the second direction in which the second protrusion protrudes may each be perpendicular to the winding direction of the electrode assembly 130. Here, the winding direction of the electrode assembly 130 may refer to the direction in which the first substrate or the second substrate is wound around the winding axis.

In an embodiment, the second protrusion of the sealing tape 360 may protrude further below the lower surface of the electrode assembly 130. The second protrusion may be bent onto the lower surface of the electrode assembly 130. The sealing tape 360 that is bent may cover a portion of the lower surface of the electrode assembly 130. Part of the sealing tape 360 (for example, a lower bending portion) may adhere closely to the electrode assembly 130.

In an embodiment, the thickness of the sealing tape 360 may be such that it provides a sufficient gap to insulate the case from the electrode assembly 130. Specifically, the sealing tape 360 may be manufactured so that its thickness is equal to or thinner than the gap between the outermost portion of the electrode assembly 130 (in its fully expanded state over the service life of the secondary battery) and the case.

In an electrode assembly of a lithium-ion battery composed of electrodes and a separator, expansion and contraction of electrode plates may occur due to insertion and extraction of lithium ions during charging and discharging. A finishing tape may be attached to the outermost portion of the electrode assembly. In this case, stress may accumulate at the portion where the finishing tape is attached due to a thickness step during expansion and contraction of the electrode plates. Cracks in the electrode plates may occur along the boundary of the finishing tape due to the stress applied to the electrode plates.

When cracks occur in the electrode assembly, output may decrease due to concentration of resistance at the cracked portions, and the amount of heat generated may significantly increase, thereby increasing the risk of fire. In particular, in battery types having a high expansion and contraction ratio during charging and discharging, the occurrence rate of cracks may be even higher.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

## Claims

1. A secondary battery (100), comprising:
an electrode assembly (130) comprising a first electrode (132) including a first electrode tab (133), a separator (140), and a second electrode (136);
a case (110) having an open side through which the electrode assembly (130) is accommodated, the case (110) being electrically connected to the second electrode (136);
a cap assembly (120) configured to close the open side of the case (110), the cap assembly (120) being electrically connected to the first electrode tab (133); and
a sealing tape (160) surrounding an outermost portion of the electrode assembly (130), wherein:
the sealing tape (160, 260, 360) comprises a plurality of first protrusions (510, 610, 710, 810, 1110, 1210, 1310, 1410) protruding in a first direction toward an upper end of the electrode assembly (130), and a plurality of second protrusions (520, 620, 720, 820, 1120, 1220, 1320, 1420) connected to the plurality of first protrusions (510, 610, 710, 810, 1110, 1210, 1310, 1410), the plurality of second protrusions (520, 620, 720, 820, 1120, 1220, 1320, 1420) protruding in a second direction toward a lower end of the electrode assembly (130),
the plurality of first protrusions (510, 610, 710, 810, 1110, 1210, 1310, 1410) and the plurality of second protrusions (520, 620, 720, 820, 1120, 1220, 1320, 1420) are alternated,
the plurality of first protrusions (510, 610, 710, 810, 1110, 1210, 1310, 1410) are on an upper side of a reference line (C),
the plurality of second protrusions (520, 620, 720, 820, 1120, 1220, 1320, 1420) are on a lower side of the reference line (C),
the reference line (C) divides the sealing tape (160, 260, 360) in a width direction perpendicular to the first direction and second direction, and
at least some of the plurality of first protrusions (510, 610, 710, 810, 1110, 1210, 1310, 1410) or at least some of the plurality of second protrusions (520, 620, 720, 820, 1120, 1220, 1320, 1420) cover at least a portion of an upper surface or a lower surface of the electrode assembly (130).

2. The secondary battery (100) according to claim 1, wherein:
the electrode assembly (130) includes a winding of the first electrode (132), the second electrode (136), and the separator (140),
the sealing tape (160, 260, 360) surrounds the outermost portion of the electrode assembly (130) along a winding direction, and
the first direction and the second direction are each perpendicular to the winding direction of the electrode assembly (130).

3. The secondary battery (100) according to claim 1 or 2, wherein the plurality of first protrusions (510, 610, 710, 810, 1110, 1210, 1310, 1410) comprise a plurality of upper bending portions (160b, 514, 1116) that are bent and cover the portion of the upper surface of the electrode assembly (130).

4. The secondary battery (100) according to any of claims 1 to 3, wherein a shape of an outer side (516) of the plurality of first protrusions (510) and the reference line (C), and a shape of an inner side (518) of the plurality of first protrusions (510) and the reference line (C) correspond to each other.

5. The secondary battery (100) according to claim 4, wherein the shape of the outer side of the plurality of first protrusions (510, 610, 710, 810, 1110, 1210, 1310, 1410) and the reference line (C), and the shape of the inner side of the plurality of first protrusions (510, 610, 710, 810, 1110, 1210, 1310, 1410) and the reference line (C) are one of a rectangle, a trapezoid, and a semicircle.

6. The secondary battery (100) according to any of claims 1 to 3, wherein a shape of an outer side of the plurality of first protrusions (510, 610, 710, 1110, 1210, 1310) and the reference line (C), and a shape of an inner side of the plurality of first protrusions (510, 610, 710, 1110, 1210, 1310) and the reference line (C) differ from each other.

7. The secondary battery (100) according to claim 6, wherein the shape of the outer side of the plurality of first protrusions (610, 1210) and the reference line (C) is a trapezoid, and the shape of the inner side of the plurality of first protrusions (610, 1210) and the reference line (C) is a triangle.

8. The secondary battery (100) according to any of claims 1 to 7, wherein the sealing tape (160, 260) comprises:
a substrate layer (312, 1020) and an inner adhesive layer (314), and
the inner adhesive layer (314, 1030, 1031) is between the electrode assembly (130) and the substrate layer (312, 1020).

9. The secondary battery (100) according to claim 8, wherein the sealing tape (160, 260) further comprises an outer adhesive layer (316, 1040) between the case (110) and the substrate layer (312, 1020).

10. The secondary battery (100) according to any of claims 3 to 9, wherein:
the first electrode tab (133) is welded to the cap assembly (120), and
the plurality of upper bending portions (160b, 514, 1116) are spaced apart from a region where the first electrode tab (133) and the cap assembly (120) are welded by at least a predetermined distance.

11. The secondary battery (100) according to any of claims 1 to 10, wherein the plurality of second protrusions (520, 620, 720, 820, 1120, 1220, 1320, 1420) comprise a plurality of lower bending portions (1126) that are bent, resulting in a plurality of lower bent portions (1126), and cover a portion of a lower surface of the electrode assembly (130).

12. The secondary battery (100) according to claim 11, wherein:
the second electrode (136) comprises a second electrode tab (137),
the second electrode tab (137) is welded to the case (110), and
the plurality of lower bent portions (1126) are spaced apart from a region where the second electrode tab (137) and the case (110) are welded by at least a predetermined distance.

13. The secondary battery (100) according to any of claims 1 to 12, wherein the sealing tape (160) surrounds the electrode assembly (130) by at least one full turn.

14. The secondary battery (100) according to any of claims 1 to 13, wherein a shape of the plurality of first protrusions (610, 710, 810, 1110, 1210, 1310, 1410) and a shape of the plurality of second protrusions (620, 720, 820, 1120, 1220, 1320, 1420) differ from each other.

15. A battery module, wherein a plurality of the secondary battery (100) according to any of claims 1 to 14 are electrically connected.
